# EUROPEAN PATENT APPLICATION

(11) **EP 3 978 370 A1**
(43) Date of publication of application: **06.04.2022**
(21) Application number: 20199547.9
(22) Date of filing: 01.10.2020
(51) Int. Cl.: B64F 1/32, B07C 5/02, B64F 1/36

(54) **A METHOD AND A SYSTEM OF LOADING A PIECE OF LUGGAGE ON TO A CONVEYOR**

(71) Applicant: BBHS A/S, 2640 Hedehusene (DK)
(72) Inventor: Paldavicius, Dovydas, 2640 Hedehusene (DK); Bargum, Jonas Riddersholm, 2640 Hedehusene (DK)
(74) Representative: Inspicos P/S

(57) **Abstract**

A system and a method of feeding luggage to a conveyor where the luggage is fed to the conveyor only if having a dimension small enough across the conveyor.

## Description

The present invention relates to a method of loading luggage on to a conveyor able to receive luggage within predetermined dimensions. Luggage, such as in airports, may comprise suitcases which are normally designed to fit within predetermined dimensions making them suitable for handling in airports. Luggage may, however, also be more oddly sized elements, such as skis, strollers and the like, which may have dimensions not suitable for luggage handling systems, as they may not fit the conveyors and thus may block the system or take up too much space on the conveyors.

Conveyor systems for handling luggage may be seen in e.g. EP1931584, scanning the luggage in two perpendicular dimensions before determining whether the luggage is allowed on to a conveyor. The present invention is a simpler and more rugged manner of making such a decision.

In a first aspect, the invention relates to a method of loading luggage onto a luggage conveyor, the method comprising:
- providing a first conveyor comprising a piece of luggage,
- determining a first dimension of the piece of luggage along a first direction relative to the piece of luggage,
- if the first dimension is below a first threshold length, feeding the piece of luggage onto the luggage conveyor, along a second direction, in a manner so that the first direction is at least substantially perpendicular to the second direction, and
- if the first dimension is above the first threshold length:
   - determining a second dimension of the piece of luggage along a third direction being at least substantially perpendicular to the first direction and
   - if the second dimension is below a second threshold, feeding the piece of luggage onto the luggage conveyor, along the second direction, in a manner so that the third direction is at least substantially perpendicular to the second direction.

In this context, luggage may be any type of goods, such as boxes, suitcases, bags, or the like. The present method may be useful in an airport or other transport or sorting situation where the luggage or goods is to be conveyed by and potentially stored on conveyors.

A conveyor may be a revolving belt, revolving or rotating rollers, a modular belt, slides or the like. A conveyor of trays or individual leaves or slats, overlapping or not, will also be suitable. A conveyor usually has a direction or intended direction of travel of the luggage. A conveyor may transport the luggage along a straight line or along a curved path which may remain in a horizontal plane or which may be both horizontally and vertically directed.

A conveyor preferably has a preferred or maximum width in the sense that luggage within such dimensions may be conveyed by the conveyor without problems. The conveyor or surroundings thereof, such as uprights or struts carrying the conveyor or other elements and between which the conveyor travels, may define upper limits for the luggage at least in a direction perpendicular to or across the direction of travel at least at these surroundings/struts/uprights. In many embodiments, the conveyor itself has a width defining an upper limit for the luggage across the direction of travel.

The first conveyor may be of any type and may transport a plurality of pieces of luggage. The first conveyor may be a main or sorting conveyor along which the luggage from a check-in portion of an airport, or a receiving portion of a storage facility, may receive the pieces of luggage. The luggage may then be desired delivered to one or a plurality of luggage conveyors which may store the luggage or transport it further to other elements, such as elements configured to transport the luggage away from the conveyors, such as away from a sorting facility on lorries, or toward airplanes on carts or in containers.

The first dimension of the piece of luggage may be determined in any manner. The dimension may be determined from an image of the piece of luggage or by optical sensors detecting the passing of the luggage along the conveyor. Tactile means may be used for determining the dimension by engaging the piece of luggage from different positions.

The dimension is determined along a first direction relative to the piece of luggage. This direction may be along a side of the luggage, if the luggage e.g. is essentially rectangular or has an essentially rectangular cross section such as when projected on to the first conveyor. Luggage such as boxes and suitcases generally have a rectangular cross section or shape, even though rounded corners and the like may be seen.

Naturally, the first direction may be any direction in relation to the piece of luggage. As the piece of luggage may be fed to the luggage conveyor while oriented so that this direction is perpendicular to the direction along which the luggage is fed on to the luggage conveyor, it may be desired that the first direction is along a side of the luggage so that the luggage takes up less length along the second direction.

The first dimension often is a length. The dimension may be a longest length along the dimension, such as if the luggage is projected onto a straight line extending parallel to the direction. The dimension may be the largest distance between the extreme portions of the projection. When the direction is along a side of a rectangularly shaped luggage, the dimension may be a length of that side.

The first threshold length may be any desired length, such as a width of the luggage conveyor or a length smaller than this width. It may be desired to ensure that the conveyor is wider than the luggage so that the luggage may be allowed to not be fully centered on the conveyor as well as being allowed to be rotated in relation to the conveyor. Thus, the first threshold length may be a percentage, lower than 100%, of the width of the luggage conveyor, such as 95%, 90%, 85%, 80%, 75% thereof or lower.

When the first dimension is lower than, or equal to, the first threshold length, the piece of luggage is fed onto the luggage conveyor in a manner so that the first direction is at least substantially perpendicular to the second direction, along which the luggage is fed onto the luggage conveyor. Thus, the second direction may be a direction of movement of the second conveyor at least at a position thereof receiving the luggage. The luggage is so oriented that the first direction, along which the first dimension is determined, is perpendicular to, or at least substantially so, to the width of the luggage conveyor. However, if the first threshold length is selected so that the luggage will fit the luggage conveyor, there will be space for the luggage.

If the first dimension exceeds the first threshold, there may not be space for the luggage on the luggage conveyor. In that situation, a second dimension is determined of the piece of luggage along a third direction being at least substantially perpendicular to the first direction. The determination of the second dimension may be made in the same manner or in a different manner from that by which the first dimension is determined.

Clearly, the first and third directions need not be completely perpendicular to each other. Any angle may exist between the first and second directions, but a 90 degrees difference is desired especially when the luggage is usually seen as having a side length along the direction of movement of the first conveyor or when, as is described below, the luggage is intentionally aligned to have sides extending at least substantially along the direction of movement of the first conveyor.

If the second dimension is below a second threshold, which may be identical or at least substantially identical to the first threshold, the piece of luggage is fed onto the luggage conveyor, along the second direction, in a manner so that the third direction is at least substantially perpendicular to the second direction.

Clearly, a number of luggage conveyors may be provided. Such conveyors may have the same widths or different widths.

The luggage may, in the first feeding step, be fed onto one luggage conveyor and the luggage being fed in the second feeding step may be fed onto another luggage conveyor. In such a situation, the first and second thresholds may be adapted to the respective luggage conveyors.

In one embodiment, the piece of luggage is rotated at least substantially 90 degrees between the step of determining the first dimension and the step of determining the second dimension. In this manner, the first and second dimensions may be determined in the same manner such as using similar detector types, while the luggage is transported on the first conveyor. Alternatively, the luggage may be fed onto another conveyor, such as a conveyor extending perpendicular to the first conveyor, whereby no rotation need be performed, if the luggage is transferred from one conveyor to the other using e.g. a pusher.

In one embodiment, the steps of determining the second dimension and feeding the piece of luggage onto the luggage conveyor are performed only if the first dimension is below a third threshold. In this manner, it may be ensured that too large piece of luggage is not fed to the luggage conveyor. In fact, such luggage may be maintained on the first conveyor and directed toward an output at which such luggage may be handled manually. This third threshold may be defined by either the luggage conveyor or any conveyors provided between the first and luggage conveyors. Such intermediary conveyors may be wider than the luggage conveyor and may thus accept luggage with a first dimension exceeding the first threshold but not if it exceeds the third threshold. Even though such luggage may not reach the luggage conveyor, it may be transported to the vicinity thereof and then be redirected for e.g. manual handling. Such output and manual handling may be in the vicinity of the luggage conveyors which may be advantageous.

Then, the step of feeding the luggage onto the luggage conveyor may comprise intermediately feeding the luggage onto an intermediate conveyor along a fourth direction, in a manner so that the first direction is perpendicular to the fourth direction.

In one embodiment, it may be desired, before determining the first dimension, that the piece of luggage is aligned to have a side thereof at least substantially parallel with the first direction and/or the direction of movement of the first conveyor. In that manner, rectangular pieces of luggage will take up less space on a conveyor than if they were rotated away from this position.

A second aspect of the invention relates to a system comprising:
- a first conveyor comprising a piece of luggage,
- a luggage conveyor,
- a first sensor configured to determine a first dimension of the piece of luggage along a first direction relative to the piece of luggage,
- a second sensor configured to determine a first dimension of the piece of luggage along a third direction relative to the piece of luggage, the third direction being at least substantially perpendicular to the first direction,
- a first controller configured to:
   - if the first dimension is below a first threshold length, feed the piece of luggage onto the luggage conveyor, along a second direction, in a manner so that the first direction is at least substantially perpendicular to the second direction, and
   - if the first dimension is above the first threshold length:
      - determine a second dimension of the piece of luggage along the third direction and
      - if the second dimension is below a second threshold, feed the piece of luggage onto the luggage conveyor, along the second direction, in a manner so that the third direction is at least substantially perpendicular to the second direction.

In this context, the conveyors may be of the types described above. The operation of the conveyors may be handled by the controller or any other electronics.

The sensor may be any type of sensor capable of determining a dimension of a piece of luggage, such as a camera, one or more light/radiation emitters emitting light which is broken by the piece of luggage and one or more light/radiation detectors capable of sensing the light/radiation or not and from that determine the dimension. The dimension may be along a direction of travel of the conveyor so that the dimension may be determined from a combination of presence of the piece of luggage at a position and the velocity of the conveyor at that position. Multiple other types of sensors may be used.

The two sensors may be of the same or different types. The two sensors may sense the luggage along the same overall directions (such as in relation to earth's coordinate system), such as if the piece of luggage is rotated between the sensors. Alternatively, the sensors may be configured to sense the dimensions along different overall directions.

The controller may receive outputs from the sensors. The sensors may output the dimension sensed or more raw output from which the controller may determine the dimensions.

The operation of the controller is to obtain the operation described above:
- if the first dimension is below a first threshold length, the piece of luggage is fed onto the luggage conveyor, along a second direction, in a manner so that the first direction is at least substantially perpendicular to the second direction, and
- if the first dimension is above the first threshold length:
   - a second dimension is determined of the piece of luggage along the third direction and
   - if the second dimension is below a second threshold, the piece of luggage is fed onto the luggage conveyor, along the second direction, in a manner so that the third direction is at least substantially perpendicular to the second direction.

The above considerations and embodiments are equally valid for this aspect of the invention. Thus, the dimensions may be compared to the width(s) of the conveyor(s).

As also described above, the first and second thresholds may be at least substantially identical.

In one embodiment, the system further comprises a rotator configured to rotate the piece of luggage at least substantially 90 degrees, the rotator being positioned between the first and second sensors. This positioning "between" is a position which the luggage reaches after the position of the first sensor and before reaching the position of the second sensor. Clearly, the conveyor may be meandering, so that the positions need not be on a straight line.

In one embodiment, the controller is configured to only determine the second dimension and feed the piece of luggage onto the luggage conveyor if the first dimension is below a third threshold. Thus, resources are only used if required. This is also described above.

One embodiment of the system further comprises an intermediate conveyor directed having a fourth direction perpendicular to the first direction. This intermediate conveyor preferably has a width larger than third threshold. Thus, the luggage may be directed on to this intermediate conveyor with the first direction perpendicular to the fourth direction.

In one embodiment, the system comprises an aligning element positioned before the first sensor. In this manner, the piece of luggage may be aligned to have a side thereof at least substantially parallel with the first direction, which preferably is the direction of movement of the conveyor. In this manner, the piece of luggage will take up less length on the conveyor.

In the following, preferred embodiments are described with reference to the drawing, wherein:

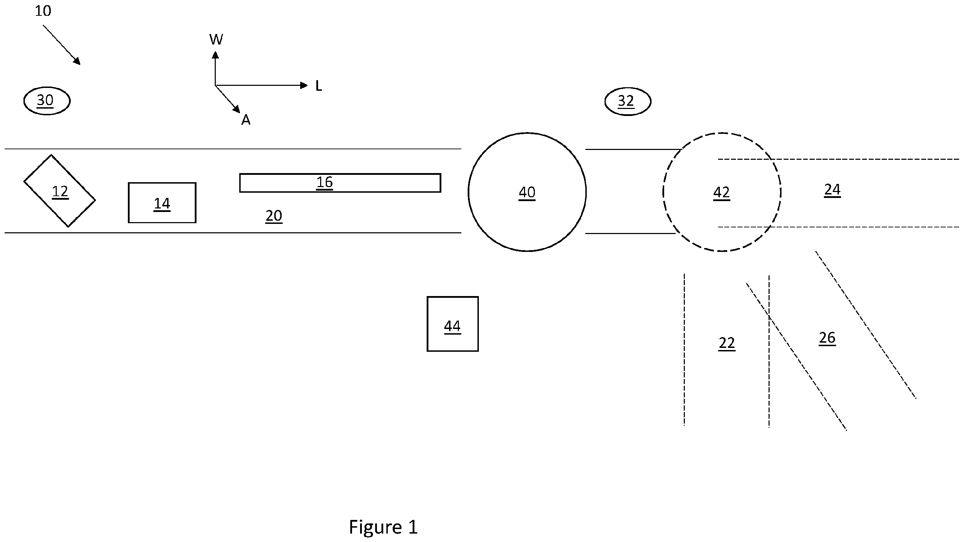

- Figure 1 illustrates a conveyor system according to the invention with different sizes and rotations of luggage,

In figure 1, a system 10 is illustrated with a conveyor 20 transporting a number of pieces of luggage, 12, 14 and 16. The pieces of luggage have different dimensions and potentially different rotational directions on the conveyor 20.

It is desired to transfer the luggage from the conveyor 20 on to a subsequent conveyor, which may be the conveyor 24 extending in the same direction as the conveyor 20, the conveyor 22 running parallel to the conveyor 20 and/or the conveyor 26 running at an arbitrary angle to the conveyor 20. The transfer may be handled by a transferring element 42, such as a pusher or the like.

In general, the conveyor 22/24/26 may be a next conveyor, a storage system or a system configured to be displaceable, such as when on wheels, relative to the conveyor 20, so as to e.g. transport received luggage to an airplane. Carts, vehicles or the like for transporting luggage between a luggage sorting unit and airplanes may be seen in EP2057063, EP32400728, WO2018/007397, WO2018/007398, WO2019/030303, for example.

In order to prevent blocking of the conveyor 22/24/26, which may have different dimensions, such as a different width, than that of the conveyor 20, it is desired to determine the extent or length of the luggage to ensure that it is below a threshold dimension which may be defined by the conveyor 22/24/26.

A sensor 30 is provided and configured to determine the extent of each piece of luggage along a direction. The direction may be along the length direction L of the conveyor, the width direction W thereof or an arbitrary angle A. Often, the extent or length of the piece of luggage is determined from a projection of the piece of luggage on to a plane of the conveyor 20.

The sensor 30 may be provided in a number of manners. A camera viewing the luggage from above would be possible but would be a very complex solution. A row of light detectors each receiving light from one of a row of light emitters would be useful. When launching parallel light beams across the conveyor 20 (any angle to the L direction may be used), the extent of the piece of luggage may be determined when the speed or movement of the conveyor 20 is known. Clearly, also other types of sensors may be used, such as arms determining the relative dimensions. Another sensor type may be seen in a device aligning the pieces of luggage with the direction of travel of the conveyor 20. One or two pushing elements may exert a force from directions perpendicular to the L direction so that luggage oriented as the bag 12 may be oriented as the bag 14. This need not be so that the longest dimension of the bag is always along the L direction, but so that sides of the bag will be. When this pusher engages the two opposed sides of the bag, the dimension along the W direction could be derived. When the dimension determined is determined along a side of a rectangular piece of luggage, the dimension is minimized, and the piece of luggage will take up less real estate (length/width) on the conveyor 22/24/26.

If the determined extent or dimension of the piece of luggage is below the threshold along the direction selected, the piece of luggage may be loaded on to the conveyor 22/24/26 in a manner so that the piece of luggage is loaded on to that conveyor rotated so that the direction is perpendicular to the conveyor 22/24/26. Thus, if the direction is along the W direction, the piece of luggage may be directly loaded on to the conveyor 22 by being transferred thereto without rotation. If the direction is along the L direction, the piece of luggage may be fed to the conveyor 22 without requiring rotation. Alternatively, the luggage may be rotated appropriately and fed onto the conveyor 26.

If the extent of the luggage exceeds the threshold, the luggage may potentially block the conveyor 22/24/26 if fed thereto with the direction perpendicular to the direction of the conveyor 22/24/26. However, the piece of luggage may have a smaller, second, extent along another direction, so the extent of the piece of luggage is determined along a second direction, such as perpendicularly to the first direction.

This may be performed using a second sensor 32, which may simply be positioned or configured to sense a direction perpendicular to that of the sensor 30. Alternatively, the sensor 32 may be positioned after a rotation unit 40 which rotates the pieces of luggage 90 degrees, so that the sensor 32 may be directed in the same manner as the sensor 30.

If the second extent or dimension of the piece of luggage is below a second threshold, which may be identical to the first dimension, the piece of luggage may now be fed to the conveyor 22/24/26 with this second direction perpendicular to the width of the conveyor 22/24/26.

If the piece of luggage is too large also in this other direction, the piece of luggage may be fed to another conveyor for manual handling, for loading into bulk handling trolleys or the like.

Naturally, also the extent along the length direction of the conveyor 22/24/26 may be of interest. Thus, if the first dimension determination reveals that the first extent of the piece of luggage exceeds another threshold, the piece of luggage may be desired not fed onto the conveyor 22/24/26 even if its dimensions when rotated would fit the conveyor for the reason that the piece of luggage would take up too much length of the conveyor 22/24/26. Thus, on the basis of the first determination, it may be determined to either directly feed the piece of luggage to the conveyor 22/24/26, discard it or rotate it to see whether it would fit the conveyor 22/24/26 in a rotated state.

If the pieces of luggage are fed to the same conveyor 22/24/26 or to conveyors having the same directions of travel, a rotating unit may be provided for rotating the pieces of luggage requiring rotation to enter the conveyor 22/24/26 in the correct direction.

Naturally, any type of conveyor structure may be used. Pushers may be used for separating pieces of luggage with dimensions below the threshold and pieces of luggage with dimensions above the threshold. Pushers may also rotate pieces of luggage, and this may be taken into account when controlling the directions of the pieces of luggage between the first sensor and the conveyor(s) 22/24/26.

In figure 2, a luggage handling system is seen in which the conveyor 20 transports the luggage past a number of pushers 42. The sensor 30 is positioned as described above to determine the extent of each piece of luggage along one direction, such as the L or W direction.

Each pusher may push luggage on to a pertaining intermediate conveyor 23 from which the luggage is desired provided on one of a number of conveyors 22 for storage before loading on to an airplane, for example. Different conveyors 22 may be intended for different flights or for different passenger classes of the same flight, so that the pertaining pusher will redirect luggage for such flights/classes for it to reach the correct conveyors.

The luggage may be aligned to have sides along the L direction as described above. Then, the pushers will redirect the luggage but not necessarily rotate it.

The sensor 30 may determine the extent in the L direction and compare it to both the width of the conveyors 22 and the conveyor 23. These widths need not be the same. Luggage may fit onto the conveyor 22 but not on the conveyor 23, as the conveyors 23 may be narrower.

Luggage intended for e.g. the flight for which sufficiently small luggage is loaded onto the conveyors 22, but which will not fit on the conveyors 22, may be loaded on to the right conveyor 23 and be allowed to travel past the conveyors and be collected (in the figure) at the end of the conveyor 23. From this position, this luggage may be collected and transported separately to the airplane.

Luggage may be collected from the conveyors 22 and transported to the airplane as bulk luggage or in a ULD.

The luggage may be loaded from the conveyor 23 to the correct conveyor 22 using a pusher, a loader or any other type of element.

A sensor 32 may be positioned at the conveyor 32 or at the conveyor 23.

It is seen that if the sensor 30 determines the dimension in the W direction, two push operations may bring the luggage to the correct conveyor 22 without rotation. If the luggage is found too long in the W direction, a rotation may be required. The rotator may be positioned before any of the pushers so that a single rotator may be required.

Alternatively, the sensor may determine the dimension in the L direction. Then, if the luggage is found too big even for the width of the conveyors 23, it may skip all pushers and be output at the right end of the conveyor 20. If, on the other hand, the dimension is found to fit the width of the conveyors 22, a rotation may be performed even before the pushers, so that the luggage is correctly rotated even before reaching the pertaining conveyor 23.

A controller or processor 44 may be provided for receiving the output of the sensors and control the rotation/transferring. Also, the controller may control the operation of the conveyors and keep track of e.g. where the pieces of luggage are on the belts so as to be able to operate e.g. the rotator at the right point in time.

## Claims

1. A method of loading luggage onto a luggage conveyor, the method comprising:
- providing a first conveyor comprising a piece of luggage,
- determining a first dimension of the piece of luggage along a first direction relative to the piece of luggage,
- if the first dimension is below a first threshold length, feeding the piece of luggage onto the luggage conveyor, along a second direction, in a manner so that the first direction is at least substantially perpendicular to the second direction, and
- if the first dimension is above the first threshold length:
- determining a second dimension of the piece of luggage along a third direction being at least substantially perpendicular to the first direction and
- if the second dimension is below a second threshold, feeding the piece of luggage onto the luggage conveyor, along the second direction, in a manner so that the third direction is at least substantially perpendicular to the second direction.

2. A method according to claim 1, wherein the first and second thresholds are at least substantially identical.

3. A method according to claim 1 or 2, wherein the piece of luggage is rotated at least substantially 90 degrees between the step of determining the first dimension and the step of determining the second dimension.

4. A method according to any of the preceding claims, wherein the steps of determining the second dimension and feeding the piece of luggage onto the luggage conveyor are performed only if the first dimension is below a third threshold.

5. A method according to clam 4, wherein the step of feeding the luggage onto the luggage conveyor comprises intermediately feeding the luggage onto an intermediate conveyor along a fourth direction, in a manner so that the first direction is perpendicular to the fourth direction.

6. A method according to any of the preceding claims comprising the step of, before determining the first dimension, aligning the piece of luggage to have a side thereof at least substantially parallel with the first direction.

7. A system comprising:
- a first conveyor comprising a piece of luggage,
- a luggage conveyor,
- a first sensor configured to determine a first dimension of the piece of luggage along a first direction relative to the piece of luggage,
- a second sensor configured to determine a first dimension of the piece of luggage along a third direction relative to the piece of luggage, the third direction being at least substantially perpendicular to the first direction,
- a first controller configured to:
- if the first dimension is below a first threshold length, feed the piece of luggage onto the luggage conveyor, along a second direction, in a manner so that the first direction is at least substantially perpendicular to the second direction, and
- if the first dimension is above the first threshold length:
- determine a second dimension of the piece of luggage along the third direction and
- if the second dimension is below a second threshold, feed the piece of luggage onto the luggage conveyor, along the second direction, in a manner so that the third direction is at least substantially perpendicular to the second direction.

8. A system according to claim 7, wherein the first and second thresholds are at least substantially identical.

9. A system according to claim 7 or 8, further comprising a rotator configured to rotate the piece of luggage at least substantially 90 degrees, the rotator being positioned between the first and second sensors.

10. A system according to any of claims 7-10, wherein the controller is configured to only determine the second dimension and feed the piece of luggage onto the luggage conveyor if the first dimension is below a third threshold.

11. A system according to clam 10, further comprising an intermediate conveyor directed having a fourth direction perpendicular to the first direction.

12. A system according to any of claims 7-11, comprising an aligning element positioned before the first sensor.
